# EUROPÄISCHE PATENTSCHRIFT

(11) **EP 2 647 897 B1**
(45) Veröffentlichungstag und Bekanntmachung des Hinweises auf die Patenterteilung: **08.06.2016**
(21) Anmeldenummer: 12163436.4
(22) Anmeldetag: 05.04.2012
(51) Int. Cl.: F16L 37/098, F16L 37/14

(54) **Schnellkupplungssteckverbinderaufbau**
Quick coupling connector structure
Structure de connecteur à fiche à raccordement rapide

(43) Veröffentlichungstag der Anmeldung: 09.10.2013
(73) Patentinhaber: TI Automotive (Heidelberg) GmbH, 69123 Heidelberg (DE)
(72) Erfinder: Barthel, Iris, 34270 Schauenburg (DE); Bube, Kay, 36277 Schenklengsfeld (DE); Choo, Seong-Hwa, 407-053 Incheon (KR)
(74) Vertreter: Rohmann, Michael

(56) Entgegenhaltungen:
- EP-A1- 2 251 581
- EP-A2- 1 719 944
- WO-A1-96/34224
- DE-A1-102004 054 467
- DE-C1- 10 115 399
- FR-A1- 2 908 494

## Beschreibung

Die Erfindung betrifft einen Schnellkupplungssteckverbinderaufbau.

Schnellkupplungssteckverbinderaufbauten sind aus der Praxis grundsätzlich bekannt (siehe z.B. das Dokument DE 10115399 C1). Dabei hat es sich bewährt, in einem Körper bzw. in einem Gehäuse eines Schnellkupplungssteckverbinderaufbaus einen Rückhalter anzuordnen, in dem ein Rohr mit einer eine radiale Stauchung aufweisenden Endform arretierbar ist. Weiterhin ist es aus der Praxis bekannt, das ordnungsgemäße bzw. vollständige Einführen der Endform in den Körper und ein ordnungsgemäßes Verrasten durch ein zusätzliches Sicherungselement zu überprüfen. Allerdings besteht bei den aus der Praxis bekannten Schnellkupplungssteckverbinderaufbauten das Problem, dass durch eine Beschädigung des Sicherungselementes oder dessen Verlust eine Überprüfung der ordnungsgemäß hergestellten Verbindung zwischen Endform und dem Körper nicht zuverlässig detektierbar ist.

Der Erfindung liegt daher das technische Problem zugrunde, einen Schnellkupplungssteckverbinderaufbau der vorstehend genannten Art anzugeben, der sich durch eine einfache Handhabbarkeit und hohe Funktionssicherheit auszeichnet.

Zur Lösung des technischen Problems lehrt die Erfindung einen Schnellkupplungssteckverbinderaufbau, gemäß Anspruch 1, mit einem Körper, der eine von einer Öffnung ausgehende Bohrung aufweist, einem an dem Körper fixierten Kragen, einem Rohr, welches Rohr eine Endform mit einem freien Ende und einer radialen Stauchung aufweist, einem in der Bohrung angeordneten Rückhalter und einem Sicherungselement, wobei der Kragen eine Eingangsöffnung aufweist, wobei die Endform des Rohrs durch die Eingangsöffnung und die Öffnung in die Bohrung eingesteckt ist bzw. einsteckbar ist, wobei die Bohrung benachbart zu einem kragenseitigen Ende einen Halteraufnahmeabschnitt aufweist, in welchem Halteraufnahmeabschnitt der Rückhalter angeordnet ist, wobei die radiale Stauchung der vollständig bzw. im Wesentlichen vollständig in die Bohrung eingeführten Endform lösbar mit dem Rückhalter verrastbar ist, wobei das Sicherungselement einen quer bzw. im Wesentlichen quer zu einer Längsachse der Bohrung orientierten Führungsabschnitt und einen parallel bzw. im Wesentlichen parallel zur Längsachse der Bohrung orientierten Anlageabschnitt aufweist, welcher Anlageabschnitt in die Bohrung hineinragt, wobei der Führungsabschnitt auf einer außenseitigen Oberfläche des Kragens in einer quer zur Längsachse der Bohrung orientierten Führung eindimensional bzw. im Wesentlichen eindimensional aus einer Freigabeposition in eine Sicherungsposition vorzugsweise reversibel verschiebbar ist, wenn die radiale Stauchung der Endform lösbar mit dem Rückhalter verrastet ist, wobei ein radialer Abstand zwischen der Endform und dem Anlageabschnitt in der Sicherungsposition kleiner ist als der radiale Abstand zwischen der Endform und dem Anlageabschnitt in der Freigabeposition. Der Anlageabschnitt liegt vorzugsweise in der Sicherungsposition zumindest abschnittsweise an der Endform an. Bevorzugt ist der Anlageabschnitt in der Freigabeposition beabstandet von der Endform in der Bohrung angeordnet. Radialer Abstand zwischen der Endform und dem Anlageabschnitt meint im Rahmen der Erfindung einen Abstand zwischen der vorzugsweise zylinderförmigen, äußeren Mantelfläche der Endform und einer endformseitigen Oberfläche des Anlageabschnitts. Es empfiehlt sich, dass der radiale Abstand zwischen der Endform und dem Anlageabschnitt in der Freigabeposition größer ist als die Höhe der Stauchung der Endform. Höhe der Stauchung meint im Rahmen der Erfindung einen Vorstand der Stauchung in radialer Richtung über die Mantelfläche der Endform. Gemäß einer Ausführungsform ist der radiale Abstand zwischen der Endform und dem Anlageabschnitt in der Sicherungsposition kleiner als die Höhe der Stauchung der Endform.

Der Körper bzw. das Gehäuse ist vorzugsweise aus einem Kunststoff gefertigt. Die Öffnung ist zweckmäßigerweise an einem ersten Ende der einen Durchgang definierenden Bohrung angeordnet. Es ist möglich, dass an ein zweites Ende der Bohrung ein Rohr oder ein Schlauch angeschlossen ist bzw. anschließbar ist. Es empfiehlt sich, dass die Öffnung in einer ringförmigen Stirnfläche des Körpers angeordnet ist. Zweckmäßigerweise ist die Bohrung und/oder die Öffnung des Körpers kreisrund ausgebildet. Benachbart zu der Öffnung weist der Körper einen Halteraufnahmeabschnitt auf, dessen Durchmesser vorzugsweise größer ist als der Durchmesser der Öffnung in der ringförmigen Stirnfläche. In Richtung des zweiten Endes des Körpers schließt an den Halteraufnahmeabschnitt ein Dichtungsabschnitt an, dessen Durchmesser empfohlenermaßen kleiner ist als der Durchmesser des Halteraufnahmeabschnitts. Es liegt im Rahmen der Erfindung, dass in dem Dichtungsabschnitt zumindest eine Dichtung und/oder zumindest ein Zwischenelement und/oder zumindest ein Zwischenring angeordnet ist.

Vorteilhafterweise ist der Kragen lösbar, beispielsweise durch eine Rastverbindung, mit dem Körper verbunden. Der Kragen weist vorzugsweise Rastvorsprünge auf, die halteraufnahmeabschnittsseitig die ringförmige Stirnfläche des Körpers hintergreifen. Es liegt im Rahmen der Erfindung, dass die von dem Kragen definierte Eingangsöffnung einen kleineren Durchmesser als die Öffnung des Körpers aufweist. Gemäß einer Ausführungsform ist an einer körperseitigen Oberfläche des Kragens ein Mantelelement angeschlossen, welches Mantelelement den Körper vorzugsweise zumindest teilweise und bevorzugt vollständig bzw. im Wesentlichen vollständig umläuft. Eine Höhe des Mantelelements ist vorzugsweise geringer als eine axiale Länge des Halteraufnahmeabschnitts. Höhe des Mantelelements meint im Rahmen der Erfindung die Ausdehnung des Mantelelements in Richtung der Längsachse der Bohrung. Es ist möglich, dass die dem Körper abgewandte, äußere Oberfläche des Mantelelements eine Profilierung aufweist, um vorzugsweise ein Ergreifen und/oder Verschieben des Mantelelements parallel zur Längsachse der Bohrung zu erlauben bzw. zu erleichtern. Axiale Länge des Halteraufnahmeabschnitts meint die Ausdehnung des Halteraufnahmeabschnitts in Richtung der Längsachse der Bohrung.

Das in den Körper eingeführte Rohr ist vorzugsweise ein starres Metallrohr, beispielsweise ein Rohr aus Edelstahl. Grundsätzlich ist es möglich, dass das Rohr aus einem beliebigen Material, beispielsweise aus einem Kunststoff, gefertigt ist. Gemäß einer Ausführungsform weist das Rohr eine Wandstärke von ungefähr 1 mm und einen Durchmesser von beispielsweise 8 mm auf. Es empfiehlt sich, dass das freie Ende beabstandet zu der radialen Stauchung angeordnet ist. Zwischen der radialen Stauchung und dem freien Ende ist vorzugsweise eine zylindrische Dichtfläche angeordnet, die sich gemäß einer bevorzugten Ausführungsform in den Dichtungsabschnitt hinein und gegebenenfalls durch den Dichtungsabschnitt hindurch erstreckt, wenn die Endform vollständig bzw. im Wesentlichen vollständig in den Körper eingeführt ist. Der Zustand, in dem die Endform vollständig bzw. im Wesentlichen vollständig in den Körper eingeführt ist, wird im Rahmen der Erfindung auch als montierter Zustand bezeichnet. Im montierten Zustand liegt die zumindest eine Dichtung vorzugsweise fluiddicht an der bevorzugt zylindrisch ausgebildeten Dichtfläche der Endform an.

Der Rückhalter ist vorzugsweise zylindrisch ausgebildet und weist im Rahmen der Erfindung einen Ring auf, der an den Dichtungsabschnitt des Körpers angrenzt, wenn der Rückhalter in dem Halteraufnahmeabschnitt des Körpers aufgenommen ist. An den Ring ist zumindest ein Verriegelungsarm angeschlossen, der mit einer Schulter an der halteraufnahmeabschnittsseitigen Oberfläche der ringförmigen Stirnfläche anliegt. Von der Schulter erstreckt sich zweckmäßigerweise ein Rückhaltearm vorzugsweise in Richtung des Dichtungsabschnitts und bevorzugt in radialer Richtung nach innen bzw. in Richtung auf die Längsachse der Bohrung. Gemäß einer bevorzugten Ausführungsform weist ein freies Ende des Rückhaltearms eine Rastschulter auf, die im montierten Zustand der Endform an einem Rohrabschnitt der Endform anliegt, welcher Rohrabschnitt zwischen der radialen Stauchung und der Öffnung angeordnet ist. Besonders bevorzugt weist der Kragen ein in die Öffnung hineinragendes Spreizelement auf, wobei vorteilhafterweise durch eine Druckbeaufschlagung des Kragens eine Verlagerung des Kragens in Richtung des Körpers erfolgt, so dass der zumindest eine Rückhaltearm von der Endform weggebogen und die Endform aus dem Körper entfernbar ist.

Vorzugsweise ist die Endform lediglich dann in den Körper einführbar, wenn sich das Sicherungselement in der Freigabeposition befindet. Besonders bevorzugt ist das Sicherungselement ausschließlich dann aus der Freigabeposition in die Sicherungsposition verschiebbar, wenn die Endform in dem montierten Zustand in dem Körper angeordnet ist. Bei einem unvollständigen Einsetzen der Endform in den Körper wird beim Verschieben des Sicherungselementes aus der Freigabeposition in Richtung der Endform bzw. in die Sicherungsposition der Anlageabschnitt zur Anlage an die radiale Stauchung gebracht, wodurch ein weiteres Verlagern bzw. Verschieben des Sicherungselementes in Richtung der Endform bzw. in die Sicherungsposition ausgeschlossen wird. Es liegt im Rahmen der Erfindung, dass das eindimensionale bzw. im Wesentlichen eindimensionale Verschieben des Sicherungselementes eine translatorische Bewegung darstellt, wobei vorteilhafterweise die Bewegungsrichtung in einer radialen Richtung in Bezug auf die Bohrung des Körpers ausgerichtet ist.

Besonders bevorzugt ist das Sicherungselement als L-Profil ausgebildet, wobei ein Schenkel des L-Profils von dem Führungsabschnitt und ein anderer Schenkel des L-Profils von dem Anlageabschnitt gebildet ist, wobei zwischen dem Führungsabschnitt und dem Anlageabschnitt vorteilhafterweise ein rechter Winkel bzw. ein ungefähr rechter Winkel ausgebildet ist. Es ist möglich, dass das Sicherungselement aus einem Kunststoff, beispielsweise aus einem Polyphenylensulfid (PPS), gebildet ist. Das Sicherungselement stellt im Rahmen der Erfindung einen redundanten Rückhalter dar. Gemäß einer Ausführungsform ist die Endform durch das Sicherungselement in dem Körper haltbar, wenn vorzugsweise durch das Verlagern des Kragens in Richtung des Körpers der Rückhaltearm des Rückhalters die radiale Stauchung der Endform bzw. die Endform freigibt.

Es empfiehlt sich, dass eine Länge des Anlageabschnitts in Längsrichtung der Bohrung derart eingestellt ist, dass ein stauchungsseitiges Ende des Anlageabschnitts in der Sicherungsposition beabstandet von der Stauchung der Endform in der Bohrung positioniert ist. Es liegt im Rahmen der Erfindung, dass das stauchungsseitige Ende des Anlageabschnitts in Bezug auf die Längsachse der Bohrung bzw. der Endform beabstandet von der Stauchung der Endform angeordnet ist. Ausgehend von der Öffnung ist die Länge des Anlageabschnitts des Sicherungselements kleiner als der Abstand der Stauchung von der Öffnung. Besonders bevorzugt ist das stauchungsseitige Ende des Anlageabschnitts im montierten Zustand der Endform beabstandet bzw. kontaktfrei zu der Stauchung angeordnet, wenn das Sicherungselement in die Sicherungsposition verlagert ist. Auf diese Weise wird sichergestellt, dass das Sicherungselement zuverlässig aus der Freigabeposition in die Sicherungsposition verschiebbar ist, wenn die Endform vollständig in den Körper eingeführt ist.

Vorteilhafterweise weist eine bohrungsseitige Oberfläche bzw. endformseitige Oberfläche des Anlageabschnitts die gleiche Krümmung wie die Eingangsöffnung auf. Auf diese Weise wird eine Anlagefläche, mit der der Anlageabschnitt vorzugsweise zur Anlage an die Endform in der Sicherungsposition bringbar ist, optimiert bzw. vergrößert. Besonders bevorzugt liegt die endformseitige Oberfläche (Kontaktfläche) in der Sicherungsposition des Sicherungselementes vollständig bzw. im Wesentlichen vollständig an der Endform an. Grundsätzlich ist es möglich, dass die Krümmung der Kontaktfläche der Krümmung der Endform entspricht.

Gemäß einer Ausführungsform ist das Sicherungselement in der Freigabeposition und/oder der Sicherungsposition mit dem Kragen verrastbar. Es empfiehlt sich, dass das Sicherungselement unabhängig von dem Verrasten der Endform in dem Rückhalter mit dem Kragen verrastbar ist. Empfohlenermaßen ist das Einführen der Endform in den Körper ausgeschlossen, wenn das Sicherungselement vor dem Einführen der Endform in den Körper in der Sicherungsposition mit dem Kragen verrastet ist.

Empfohlenermaßen weist das Sicherungselement ein Rastelement und der Kragen ein komplementäres Rastelement auf. Besonders bevorzugt wird das Rastelement von zwei Rastelementen gebildet, wobei ein erstes Rastelement der Sicherungsposition und ein zweites Rastelement der Freigabeposition zugeordnet ist. Grundsätzlich ist es möglich, dass an dem Kragen das Rastelement und an dem Sicherungselement das komplementäre Rastelement angeschlossen ist. Vorteilhafterweise ist das Rastelement als Vertiefung ausgebildet. Gemäß einer Ausführungsform ist das komplementäre Rastelement als ein vorzugsweise federnd gelagerter, komplementär zu der Vertiefung ausgebildeter Vorsprung ausgebildet. Die Vertiefung ist beispielsweise kugelsegmentförmig, halbkugelförmig oder tonnenabschnittsförmig ausgebildet. Der Vorsprung ist bevorzugt derart ausgebildet, dass der Vorsprung formschlüssig in der Vertiefung aufnehmbar ist.

Es empfiehlt sich, dass die Führung als Führungskanal ausgebildet ist. Zweckmäßigerweise ist der Führungskanal auf der dem Körper abgewandten Seite (Außenseite) offen ausgebildet. Es liegt im Rahmen der Erfindung, dass der Führungsabschnitt des Sicherungselements in Längsrichtung der Bohrung nicht aus der Führung entfernbar ist. Besonders bevorzugt ist das Sicherungselement, insbesondere wenn die Endform in den Körper eingeführt ist, unverlierbar in dem Führungskanal gelagert.

Gemäß einer Ausführungsform weist der Führungskanal einen trapezförmigen Querschnitt auf. Besonders bevorzugt weist der Querschnitt die Geometrie eines symmetrischen Trapezes auf. Es empfiehlt sich, dass sich der Querschnitt des Führungskanals von einer körperseitigen Grundfläche ausgehend in Richtung der offenen Außenseite verjüngt.

Vorteilhafterweise weist der Führungskanal zumindest eine Kontrollausnehmung auf. Die Kontrollausnehmung kann als Aufweitung des Führungskanals mit einem rechteckigen bzw. im Wesentlichen rechteckigen Querschnitt ausgebildet sein.

Der Führungsabschnitt weist zumindest ein Führungselement auf, das in der Führung, vorzugsweise in dem Führungskanal geführt ist. Vorteilhafterweise ist das Führungselement formschlüssig in dem Führungskanal aufgenommen. Gemäß einer Ausführungsform weist das Führungselement einen besonders bevorzugt symmetrischen trapezförmigen Querschnitt auf.

Es empfiehlt sich, dass das Führungselement zumindest abschnittsweise im Bereich der Kontrollausnehmung angeordnet ist, wenn sich das Sicherungselement in der Sicherungsposition befindet. Vorteilhafterweise ist ein Abschnitt des Führungselements für einen Betrachter in der Kontrollausnehmung sichtbar, sobald sich das Führungselement in der Sicherungsposition befindet. Auf diese Weise ist eine zuverlässige Positionsbestimmung des Führungselements möglich. Die Anordnung des Führungselements in der Kontrollausnehmung in der Sicherungsposition gewährleistet empfohlenermaßen eine redundante Feststellung, ob sich das Sicherungselement in der Sicherungsposition befindet. Bevorzugt ist lediglich ein Abschnitt des Führungselements in der Kontrollausnehmung in der Sicherungsposition befindlich, so dass vorteilhafterweise ein Entfernen bzw. ein Abheben des Sicherungselementes aus dem Führungskanal ausgeschlossen ist.

Zweckmäßigerweise ist das Führungselement außerhalb der Kontrollausnehmung in dem Führungskanal angeordnet, wenn das Sicherungselement in der Freigabeposition ist. Empfohlenermaßen ist das Führungselement von dem Führungskanal verdeckt, wenn das Sicherungselement in der Freigabeposition ist. Mit anderen Worten ist das Führungselement in der Freigabeposition des Sicherungselements für einen Betrachter nicht sichtbar.

Gemäß einer Ausführungsform ist an einem der Bohrung gegenüberliegenden Ende des Führungsabschnitts ein Querbalken vorzugsweise zur Ausbildung eines Griffelements angeordnet. Auf diese Weise wird das Verschieben des Sicherungselementes aus der Freigabeposition in die Sicherungsposition und umgekehrt vereinfacht. Es ist möglich, dass der Querbalken eine Eingriffsöffnung aufweist, in die beispielsweise ein Werkzeug zum Verschieben des Sicherungselements eingreifen kann.

Gemäß einer Ausführungsform weist der Querbalken bzw. das Griffelement zumindest bereichsweise eine reibungserhöhende Profilierung auf, welche Profilierung an einem ergreifbaren Abschnitt des Griffelements angeordnet ist. Es empfiehlt sich, dass der ergreifbare Abschnitt parallel bzw. im Wesentlichen parallel zu der Führung bzw. dem Führungskanal angeordnet ist. Mit anderen Worten ist die Profilierung an einer parallel bzw. ungefähr parallel zur Verschieberichtung des Sicherungselements orientierten Seitenfläche des Querbalkens bzw. des Griffelements angeordnet. Die reibungserhöhende Profilierung gewährleistet eine zuverlässige Bedienbarkeit des Sicherungselementes.

Gemäß einer Ausführungsform ist an den Querbalken zumindest ein Griffsteg angeschlossen, welcher Griffsteg sich von dem Querbalken in Richtung des endformseitigen Endes des Führungsabschnitts erstreckt. Besonders bevorzugt ist an den beiden Enden des Querbalkens jeweils ein Griffsteg angeschlossen, welche Griffstege sich beidseits des Führungskanals in Richtung des endformseitigen Endes des Führungsabschnitts erstrecken. Besonders bevorzugt weist der Griffsteg bzw. weisen die Griffstege jeweils an einer dem Führungskanal abgewandten Oberfläche die reibungserhöhende Profilierung auf. Es ist möglich, dass an einer führungskanalseitigen Oberfläche des Griffstegs bzw. der Griffstege jeweils ein Rastelement angeordnet ist, das mit einem an einer Außenwand bzw. mit an den Außenwänden des Führungskanals angeordneten Rastelementen zusammenwirkt. Mit dem griffstegseitigen Rastelement bzw. mit den griffstegseitigen Rastelementen und dem korrespondierenden Rastelement bzw. den korrespondierenden Rastelementen an der Außenwand bzw. den Außenwänden des Führungskanals ist der Griffsteg bzw. sind die Griffstege mit dem Kragen in der Freigabeposition und/oder der Sicherungsposition verrastbar. Die Verrastbarkeit des Griffstegs bzw. der Griffstege an einer Außenwand bzw. an den Außenwänden des Führungskanals stellt eine zusätzliche Kontrollmöglichkeit der Position dar, in welcher sich das Sicherungselement befindet. Vorteilhafterweise wird durch das Verlagern des Sicherungselementes aus der Freigabeposition in die Sicherungsposition durch das an dem Griffsteg angeordnete Rastelement bzw. durch die an den Griffstegen angeordneten Rastelemente ein Einrastgeräusch hervorgerufen.

Es liegt im Rahmend der Erfindung, dass der Kragen mit der Maßgabe ausgebildet ist, dass in der Sicherungsposition das Sicherungselement vorzugsweise abgesehen von der Profilierung bzw. den Profilierungen überstandsfrei auf dem Kragen angeordnet ist. Überstandsfrei meint im Rahmen der Erfindung, dass das Sicherungselement zweckmäßigerweise in der Sicherungsposition bevorzugt abgesehen von der Profilierung bzw. abgesehen von den Profilierungen nicht über den Kragen übersteht. Die überstehende Profilierung bzw. die überstehenden Profilierungen gewährleisten eine problemlose Ergreifbarkeit und Verschiebbarkeit des Sicherungselements.

Der Erfindung liegt die Erkenntnis zugrunde, dass sich der erfindungsgemäße Schnellkupplungssteckverbinderaufbau durch eine einfache Handhabbarkeit sowie schnelle und problemlose Montierbarkeit auszeichnet. Wesentlich dabei ist, dass das Sicherungselement unverlierbar an dem Kragen gehalten ist, sobald die Endform in die Bohrung des Körpers eingeführt ist. Durch das erfindungsgemäße Sicherungselement ist es zudem zuverlässig möglich, eine ordnungsgemäße Verbindung zwischen der Endform und dem Körper zu detektieren. Mit dem erfindungsgemäßen Schnellkupplungssteckverbinderaufbau kann also eine fehlerhafte Verbindung zwischen der Endform und dem Körper ausgeschlossen werden, welche sich beispielsweise durch ein nicht ausreichendes Einführen der Endform in den Körper ergibt. Eine Fehlfunktion des Sicherungselements wird ebenfalls ausgeschlossen, da ein Einführen der Endform in den Körper lediglich dann möglich ist, wenn sich das Sicherungselement in der Freigabeposition befindet. Selbst wenn sich das Sicherungselement bei entfernter Endform versehentlich in der Sicherungsposition befindet, ist eine Fehlbedienung des Schnellkupplungssteckverbinderaufbaus ausgeschlossen, weil das Einführen der Endform in den Körper dann ausgeschlossen ist. Es wird also zuverlässig gewährleistet, dass die in dem Dichtungsabschnitt angeordneten Dichtungselemente bei der in den Körper einzuführenden Endform zuverlässig zur Anlage an die korrespondierende Dichtfläche der Endform gebracht werden. Insofern zeichnet sich der erfindungsgemäße Schnellkupplungssteckverbinderaufbau durch eine besondere Funktionssicherheit aus.

Nachfolgend wird die Erfindung anhand einer lediglich ein Ausführungsbeispiel darstellenden Zeichnung detailliert erläutert. Es zeigen:
- Fig. 1: einen Schnitt durch einen erfindungsgemäßen Schnellkupplungssteckverbinderaufbau mit nicht vollständig eingeführter Endform,
- Fig. 2: eine perspektivische Ansicht eines Kragens eines erfindungsgemäßen Schnellkupplungssteckverbinderaufbaus in einer ersten Ausführungsform,
- Fig. 3: eine perspektivische Ansicht eines Sicherungselementes eines erfindungsgemäßen Schnellkupplungssteckverbindersaufbaus in einer ersten Ausführungsform,
- Fig. 4a: einen Querschnitt durch einen erfindungsgemäßen Schnellkupplungssteckverbinderaufbau, bei dem das Sicherungselement in einer Freigabeposition ist,
- Fig. 4b: eine Draufsicht auf den Schnellkupplungssteckverbinderaufbau gemäß Fig. 4a,
- Fig. 5a: einen Querschnitt durch einen erfindungsgemäßen Schnellkupplungssteckverbinderaufbau gemäß der ersten Ausführungsform mit vollständig eingeführter Endform, bei der das Sicherungselement in einer Sicherungsposition befindlich ist,
- Fig. 5b: eine Draufsicht auf den Schnellkupplungssteckverbinderaufbau gemäß Fig. 5a,
- Fig. 6a: eine perspektivische Ansicht eines Kragens mit einem Sicherungselement in einer zweiten Ausführungsform,
- Fig. 6b: einen Schnitt durch den Kragen und durch das Sicherungselement gemäß Fig. 6a,
- Fig. 6c: eine perspektivische Unteransicht des Sicherungselements gemäß Fig. 6a im Schnitt,
- Fig. 7: einen Querschnitt durch einen erfindungsgemäßen Schnellkupplungssteckverbinderaufbau in der zweiten Ausführungsform, bei der sich das Sicherungselement in der Freigabeposition befindet,
- Fig. 8a: einen Schnitt durch den erfindungsgemäßen Schnellkupplungssteckverbinderaufbau gemäß Fig. 7, wobei die Endform noch nicht vollständig in den Körper eingeführt ist,
- Fig. 8b: eine Draufsicht auf den Schnellkupplungssteckverbinderaufbau gemäß Fig. 8a,
- Fig. 9a: einen Schnitt durch einen erfindungsgemäßen Schnellkupplungssteckverbinderaufbau mit vollständig eingeführter Endform und dem in der Sicherungsposition befindlichen Sicherungselement und
- Fig. 9b: eine Draufsicht auf den Schnellkupplungssteckverbinderaufbau gemäß Fig. 9a.

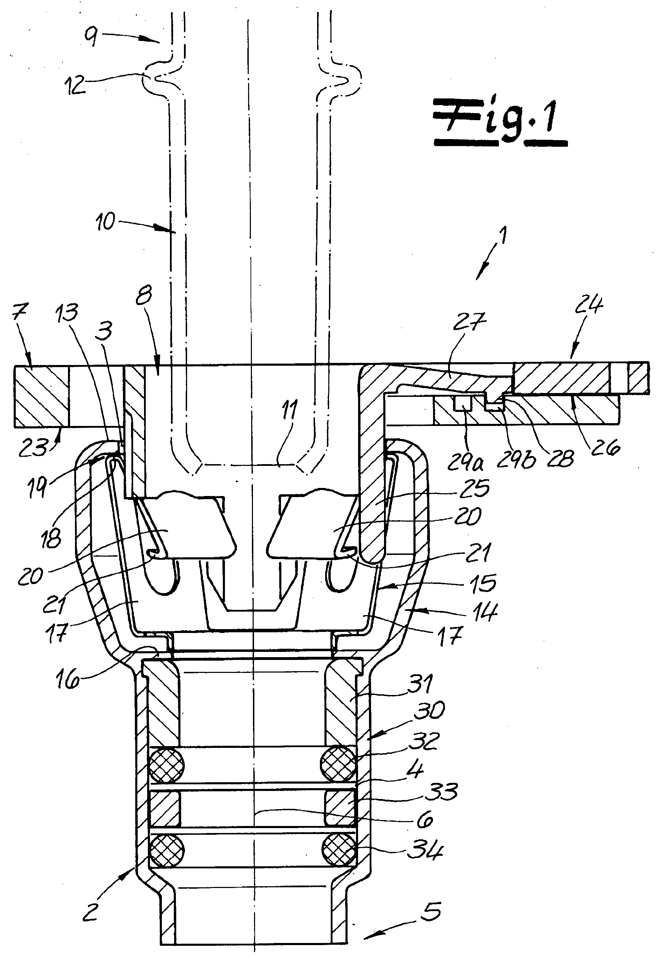

In der Fig. 1 ist ein erfindungsgemäßer Schnellkupplungssteckverbinderaufbau 1 mit einem Körper 2 dargestellt. Der Körper 2 weist eine Öffnung 3 auf, von der aus sich eine Bohrung 4 in Richtung eines zweiten Endes 5 erstreckt. Die Bohrung ist vorzugsweise und gemäß dem Ausführungsbeispiel rotationssymmetrisch ausgebildet und weist eine Längsachse 6 auf. Auf dem Körper 2 ist ein Kragen 7 mit einer Eingangsöffnung 8 fixiert, durch welche Eingangsöffnung 8 sich ein Rohr 9 mit einer Endform 10 in die Bohrung 4 erstreckt. Die Endform 10 verfügt über ein freies Ende 11 sowie eine radiale Stauchung 12. Die radiale Stauchung 12 ist in dem Ausführungsbeispiel als eine die Endform 10 umlaufende Wulst ausgebildet.

In Fig. 1 ist dargestellt, dass der Körper 2 an einem öffnungsseitigen Ende eine ringförmige Stirnfläche 13 aufweist, die die Öffnung 3 des Körpers 2 umgibt. Die ringförmige Stirnfläche 13 stellt eine öffnungsseitige Begrenzung eines in der Bohrung 4 angeordneten Halteraufnahmeabschnitts 14 dar, in welchem Halteraufnahmeabschnitt 14 ein Rückhalter 15 aufgenommen ist. Der Rückhalter 15 weist einen Ring 16 auf, an den gemäß dem Ausführungsbeispiel 4 Verriegelungsarme 17 angeschlossen sind. Die Verriegelungsarme 17 liegen mit Schultern 18 an einer halteraufnahmeabschnittseitigen Ringfläche 19 an, welche Ringfläche 19 der ringförmigen Stirnfläche 13 gegenüberliegt. Von den Schultern 18 aus erstrecken sich, wie in Fig. 1 dargestellt ist, Rückhaltearme 20 radial in Richtung der Längsachse 6 und in Richtung des zweiten Endes 5, welche Rückhaltearme von Rastschultern 21 abgeschlossen werden. Der Kragen 7 liegt mit einem Spreizelement in Form eines zylinderförmigen Freigabeabschnitts 22 gemäß dem Ausführungsbeispiel mit der Maßgabe auf den Rückhaltearmen 20 auf, dass eine Unterseite 23 des Kragens 7 beabstandet von der ringförmigen Stirnfläche 13 des Körpers 2 angeordnet ist.

Gemäß Fig. 1 ist ein Sicherungselement 24 an dem Kragen 7 verschiebbar gelagert. Das Sicherungselement 24 ist gemäß dem Ausführungsbeispiel L-förmig ausgebildet und weist einen Anlageabschnitt 25 auf, der in die Bohrung 4 hineinragt und parallel zur Längsachse 6 der Bohrung 4 orientiert ist. Das Sicherungselement 24 ist mit einem Führungsabschnitt 26 auf dem Kragen 7 geführt, welcher Führungsabschnitt 26 mit dem Anlageabschnitt 25 einen rechten Winkel definiert.

In Fig. 1 ist dargestellt, dass das Sicherungselement 24 ein aus einem Federbein 27 mit einer Rastnase 28 gebildetes Rastelement aufweist. In dem Kragen sind zwei Vertiefungen 29a, 29b angeordnet. Zur Ausbildung einer Rastverbindung ist die Rastnase 28 des Führungsabschnitts 26 durch das Federbein 27 in die der Sicherungsposition zugeordnete Vertiefung 29a oder in die der Freigabeposition zugeordnete Vertiefung 29b pressbar ist.

Gemäß dem Ausführungsbeispiel in Fig. 1 schließt an den Halteraufnahmeabschnitt 14 ein Dichtungsabschnitt 30 an, in dem gemäß dem Ausführungsbeispiel ausgehend von dem Halteraufnahmeabschnitt 14 ein Zwischenelement 31, ein erster Dichtring 32, ein Zwischenring 33 und ein zweiter Dichtring 34 angeordnet sind.

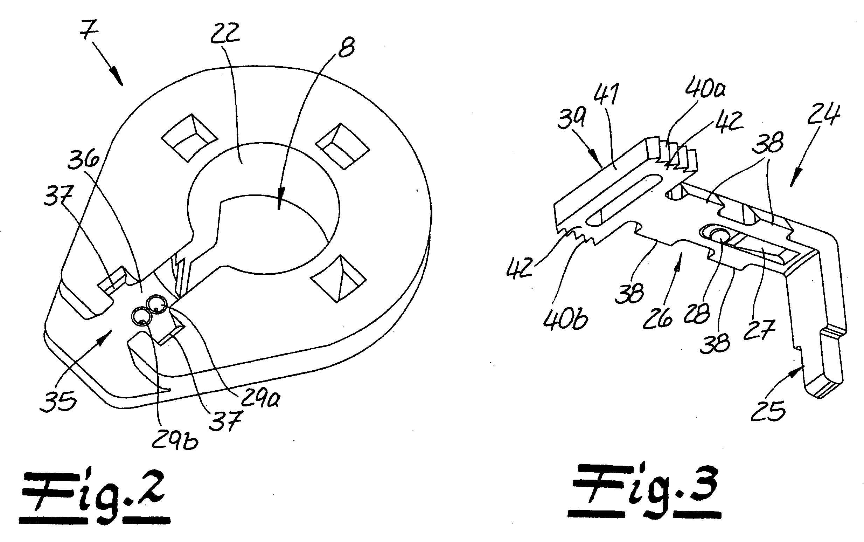

Gemäß Fig. 2 weist der Kragen 7 auf einer dem Körper 2 abgewandten Außenseite bzw. Oberseite einen Führungskanal 35 auf, der gemäß dem Ausführungsbeispiel einen Querschnitt in Form eines symmetrischen Trapezes aufweist. Oberseitig ist der Führungskanal 35 offen ausgebildet. In Fig. 2 ist gezeigt, dass eine Breite des Führungskanals 35 ausgehend von einer Grundfläche bzw. einem Boden 36 hin zu dem offenen, oberseitigen Ende des Führungskanals 35 abnimmt. In den Boden 36 des Führungskanals 35 sind die beiden Vertiefungen 29a, 29b eingebracht. Der Führungskanal 35 weist gemäß Fig. 2 zwei Kontrollausnehmungen 37 auf, wobei der Führungskanal 35 im Bereich der Kontrollausnehmungen 37 abgesehen von Anfasungen der Kontrollausnehmungen einen rechteckigen Querschnitt aufweist. In dem Führungskanal ist das in Fig. 3 dargestellte Sicherungselement 24 geführt.

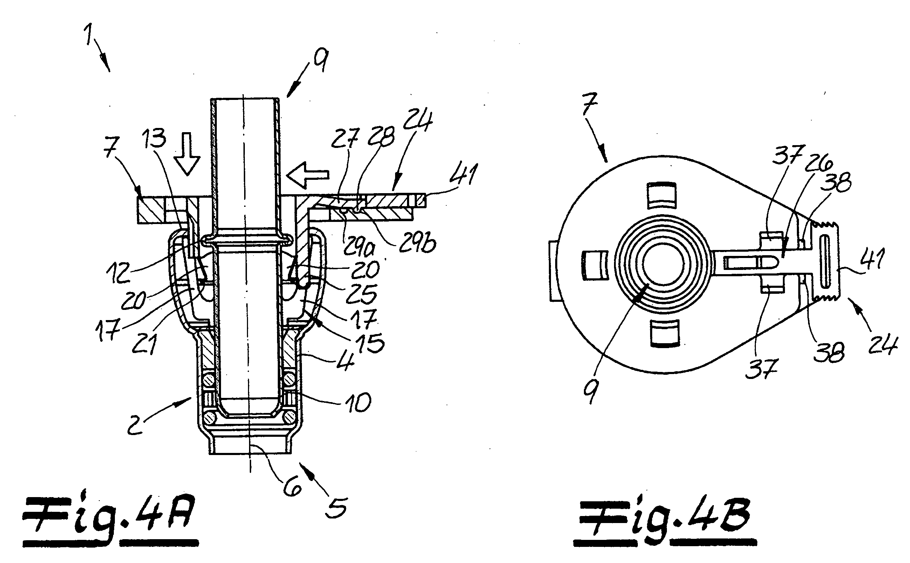

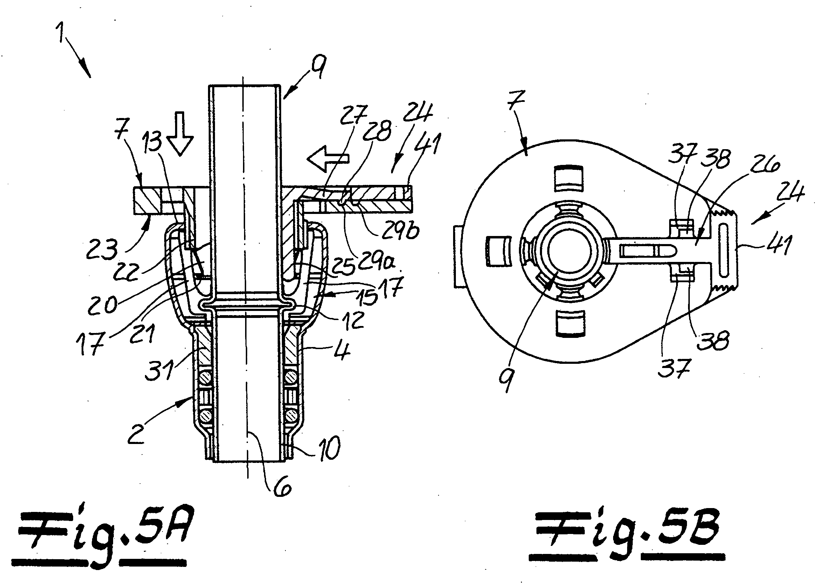

Gemäß Fig. 3 sind an den Führungsabschnitt 26 Führungselemente 38 angeformt, so dass der Führungsabschnitt 26 im Bereich der Führungselemente 38 einen Querschnitt in Form eines symmetrischen Trapezes aufweist. Der Führungsabschnitt 26 ist mit den angeformten Führungselementen 38 formschlüssig in dem Führungskanal 35 des Kragens 7 aufgenommen und zwischen einer in den Fig. 1, 4a, 4b dargestellten Freigabeposition und einer in den Fig. 5a, 5b gezeigten Sicherungsposition verschiebbar. In der Freigabeposition ist die von dem Federbein 27 beaufschlagte Rastnase in der Vertiefung 29b angeordnet. Beim Verlagern des Sicherungselementes 24 aus der Freigabeposition in die Sicherungsposition wird die Rastnase 28 aus der Vertiefung 29b gehoben und nach dem Verlagern in die Sicherungsposition durch das Federbein 27 in die Vertiefung 29a gedrückt. Zum Verlagern des Sicherungselementes 24 weist das Sicherungselement 24 einen als Griffelement 39 ausgebildeten Querbalken 41 auf, der an einem der Bohrung 4 gegenüberliegenden Ende des Führungsabschnitts 26 angeschlossen ist. Um beim Ergreifen und Verschieben des Sicherungselements 24 ein Abrutschen an dem Griffelement 39 zu verhindern, verfügt das Griffelement über Griffstege 42, deren Seitenflächen jeweils mit einer rutschhemmenden Profilierung 40a, 40b versehen sind. Weiterhin ist in Fig.. 3 dargestellt, dass der Querbalken eine Ausnehmung aufweist, in die gemäß dem Ausführungsbeispiel ein nicht dargestelltes Manipulierwerkzeug zum Verschieben des Sicherungselements 24 greifen kann.

In Fig. 4a befindet sich das Sicherungselement 24 in der Freigabeposition, wobei die Rastnase 28 in der Vertiefung 29b positioniert ist. Die Endform 10 ist noch nicht vollständig in den Körper 2 eingeführt, so dass die Rastschultern 21 der Verriegelungsarme 20 an der Endform 10 unterhalb der radialen Stauchung 12 anliegen. In Fig. 4a ist gezeigt, dass eine Länge des Anlageabschnitts 25 in Richtung der Längsachse 6 der Bohrung 4 mit der Maßgabe bemessen ist, dass zwischen einem stauchungsseitigen Ende des Anlageabschnitts 25 und der radialen Stauchung 12 ein vorgegebener Freiraum bzw. Abstand verbleibt. Auf diese Weise ist sichergestellt, dass das Sicherungselement 24 problemlos aus der in Fig. 4a dargestellten Freigabeposition in die in der Fig. 5a gezeigten Sicherungsposition verschiebbar ist. In Fig. 4b ist erkennbar, dass in den Kontrollausnehmungen 37 kein Abschnitt eines Führungselements 38 erkennbar ist, wenn sich das Sicherungselement 24 in der Freigabeposition befindet.

Das in der Sicherungsposition befindliche Sicherungselement 24 ist in den Fig. 5a und 5b dargestellt. Die Rastnase 28 des Sicherungselementes 24 greift gemäß Fig. 5a in die der Sicherungsposition zugeordnete Vertiefung 29a. Eine translatorische Verschiebung des Sicherungselementes 24 in radialer Richtung in Bezug auf die Bohrung 4 in dem Körper 2 ist gemäß den Fig. 4a, 5a, nur dann möglich, wenn die Stauchung 12 zwischen den Rastschultern 21 und dem Ring 16 des Rückhalters 15 angeordnet ist. Für den Fall, dass die Endform 10 nicht vollständig in den Körper 2 eingeführt ist, ist ein Verschieben des Sicherungselements 24 aus der Freigabeposition in die Sicherungsposition ausgeschlossen. Der Anlageabschnitt 25 stößt in diesem Fall gegen die Stauchung 12, wodurch ein Verlagern und Verrasten des Sicherungselements 24 in die Sicherungsposition verhindert wird.

In Fig. 5b ist gezeigt, dass in den Kontrollausnehmungen 37 des Führungskanals 35 jeweils ein Abschnitt der Führungselemente 38 des Führungsabschnitts 26 sichtbar ist. Auf diese Weise wird redundant zu der Verrastung der Rastnase 28 in der der Sicherungsposition zugeordneten Vertiefung 29a sichergestellt, dass die Endform 10 ordnungsgemäß und vollständig in den Körper 2 eingeführt ist. Zum Entfernen der Endform 10 aus dem Körper 2 ist es erforderlich, das Sicherungselement 24 in die Freigabeposition zu schieben und dann den Kragen 7 unter Verminderung des Abstands zwischen der Unterseite 23 des Kragens 7 und der ringförmigen Stirnfläche 13 in Richtung des Körpers 2 zu drücken, so dass der Freigabeabschnitt 22 die Rückhaltearme 20 auseinanderdrückt. Es ist es dann möglich, die Endform 10 aus dem Körper 2 zu entfernen. Vorzugsweise und gemäß dem Ausführungsbeispiel ist eine Verlagerung des Kragens 7 in Richtung der Längsachse 6 der Bohrung 4 des Körpers 2 ausgeschlossen, wenn sich das Sicherungselement 24 in der Sicherungsposition befindet. Wird der Kragen 7 in der Sicherungsposition des Sicherungselementes 24 in Richtung des Körpers 2 verlagert, wird das stauchungsseitige Ende des Anlageabschnitts 25 zur Anlage an die radiale Stauchung 12 gebracht, wodurch ein weiteres Verlagern des Kragens 7 in Richtung des Körpers 2 unterbrochen wird. Ein Auseinanderdrücken der Haltearme 20 und eine Freigabe der Endform 10 ist dann nicht möglich.

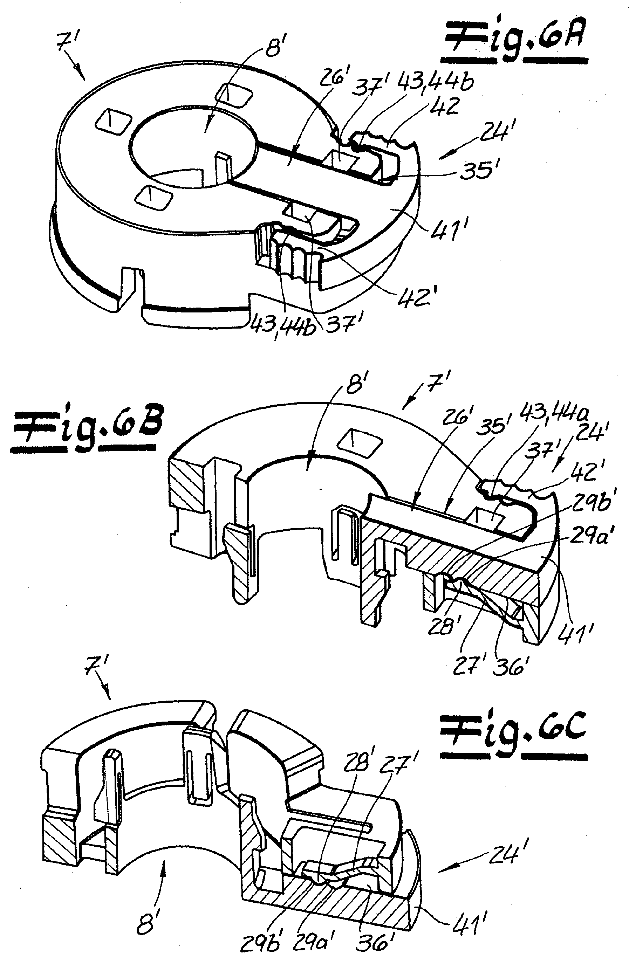

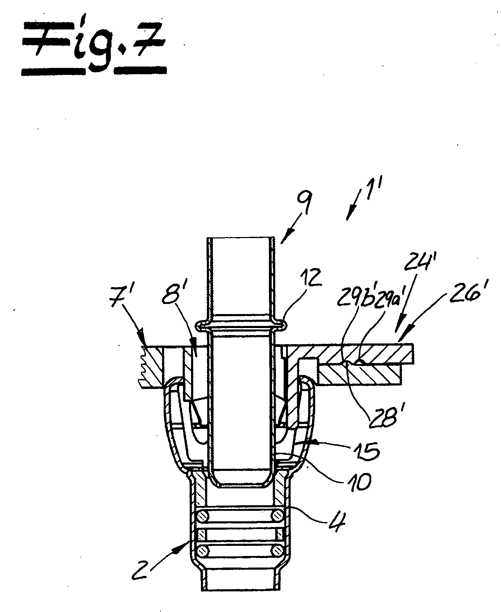

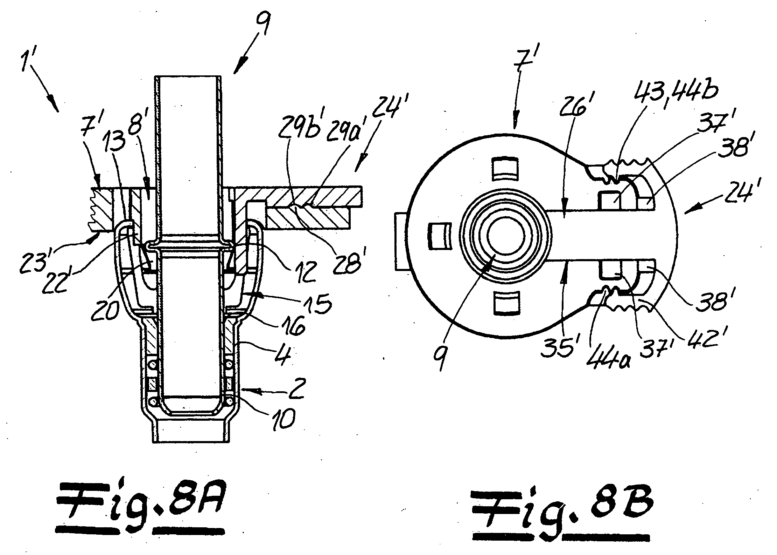

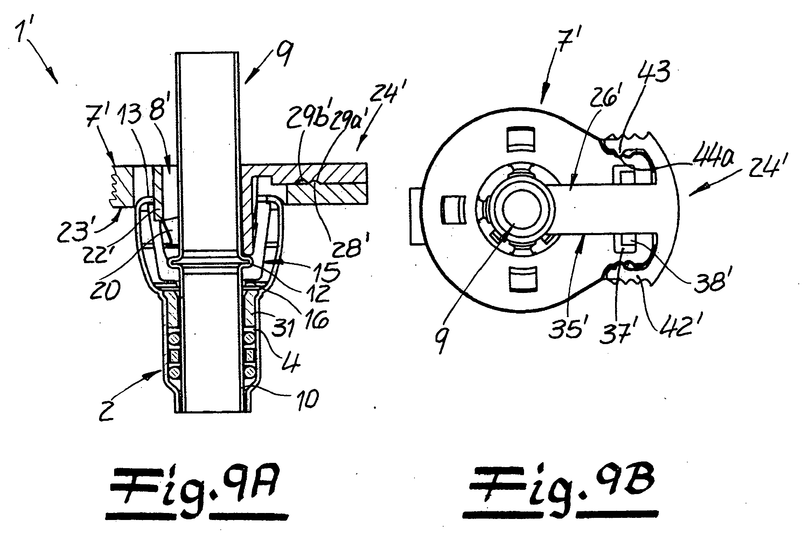

In den Fig. 6a bis 9b ist eine zweite Ausführungsform des erfindungsgemäßen Schnellkupplungssteckverbinderaufbaus 1' dargestellt. Der Aufbau des Körpers 2, der Endform 10 und des Rückhalters 15 gemäß der zweiten Ausführungsform entspricht dem Aufbau des Körpers 2, der Endform 10 und des Rückhalters 15 des Schnellkupplungssteckverbinderaufbaus 1 gemäß den Fig. 1 bis 5b. Auf dem Körper 2 gemäß dem zweiten Ausführungsbeispiel ist ein Kragen 7' mittels einer Rastverbindung an dem Körper 2 fixiert. In dem Kragen 7' ist ein Führungskanal 35' angeordnet, in dem ein Führungsabschnitt 26' des Sicherungselements 24' geführt ist. Der Führungskanal 35' weist einen Querschnitt in Form eines symmetrischen Trapezes sowie zwei Kontrollausnehmungen 37' auf, die an den Führungskanal 35' angeformt sind. Über einen Boden 36' des Führungskanals 35' steht ein mit einer Rastnase 28' bewehrtes Federbein 27' über. Durch das Federbein 27' wird die Rastnase 28' gegen eine bodenseitige Oberfläche des in dem Führungskanal 35' geführten Sicherungselementes 24' gedrückt. In der bodenseitigen Oberfläche des Sicherungselementes 24' sind zwei Vertiefungen 29a' und 29b' angeordnet, in welche die Rastnase 28' einrasten kann. In der in den Fig. 8a, 8b dargestellten Freigabestellung ist die Rastnase 28' in die Vertiefung 29b' eingeschnappt. Auf diese Weise wird das Sicherungselement 24' in der Freigabeposition gehalten. Dies ist auch in der Fig. 6b dargestellt. Durch eine translatorische Verlagerung des Sicherungselementes 24' in radialer Richtung in Bezug auf die Eingangsöffnung 8' aus der Freigabeposition in die Sicherungsposition gemäß Fig. 9a, 9b wird die Rastnase 28' aus der Vertiefung 29b' gedrückt und zum Eingriff in die Vertiefung 29a' gebracht.

Weiterhin ist in Fig. 6a dargestellt, dass an den Führungsabschnitt 26' des Sicherungselementes 24' ein Querbalken 41' angeformt ist. An den Querbalken 41' sind Griffstege 42' angeschlossen, die parallel zu dem Führungsabschnitt 26' des Sicherungselements 24' orientiert sind und sich in Richtung der Eingangsöffnung 8' des Kragens 7' erstrecken. Führungskanalseitig weisen die Griffstege 42' jeweils einen Rastzahn 43 auf, welche Rastzähne 43 in den jeweiligen Rastzähnen 43 zugeordnete Rastkerben 44a, 44b in der Freigabeposition und Sicherungsposition greifen. Die Rastkerben 44a, 44b sind jeweils an griffstegseitigen Oberflächen des Führungskanals 35' angeordnet. Befindet sich das Sicherungselement 24' in der Freigabeposition, so greifen die Rastzähne 43 in die Rastkerben 44b. Durch Verlagern des Sicherungselements 24' aus der in Fig. 8a dargestellten Freigabeposition in die in Fig. 9a dargestellte Sicherungsposition werden die Rastzähne 43 zum Eingriff in die Rastkerben 44a gebracht, wobei bei dem Einrasten in den Rastkerben 44a ein Rastgeräusch erzeugt wird. Zur Feststellung, ob sich das Sicherungselement 24' in der Sicherungsposition befindet, sind fernerhin an den Führungsabschnitt 26' Führungselemente 38' angeformt, die in einen Hinterschnitt des trapezförmigen Führungskanals 35' eingreifen und beim Verlagern in die Sicherungsposition in den Kontrollausnehmungen 37' sichtbar sind. Solange sich das Sicherungselement 24' in der in den Fig. 8a, 8b dargestellten Freigabeposition befindet, sind die Führungselemente 38' in den Kontrollausnehmungen 37' des Führungskanals 34' nicht sichtbar.

Ein Verschieben des Sicherungselements 24' aus der in den Fig. 8a, 8b dargestellten Freigabeposition in die in den Fig. 9a, 9b dargestellte Sicherungsposition ist analog zu der ersten Ausführungsform gemäß den Fig. 1 bis 5b lediglich dann möglich, wenn, wie in den Fig. 9a, 9b dargestellt, die radiale Stauchung 12 der Endform 10 zwischen dem Ring 16 des Rückhalters 15 und den Rückhaltearmen 20 positioniert ist. Das Freisetzen der Endform 10 aus dem Körper 2 gemäß der zweiten Ausführungsform gemäß den Fig. 6a bis 9b erfolgt in analoger Weise zu dem Freisetzen der Endform 10 aus dem Körper 2 gemäß der ersten Ausführungsform. Sobald das Sicherungselement 24' aus der Sicherungsposition in die Freigabeposition verlagert ist, wird durch Drücken des Kragens 7' in Richtung des Körpers 2 ein Freiraum zwischen der Unterseite 23' des Kragens 7' und der ringförmigen Stirnfläche 13 des Körpers 2 vermindert. Der Freigabeabschnitt 22' des Kragens 7' drückt dann die Rückhaltearme 20 des Rückhalters 15 auseinander, so dass gemäß den Fig. 8a, 8b die Endform aus dem Körper 2 herausgezogen werden kann.

## Patentansprüche

1. Schnellkupplungssteckverbinderaufbau mit einem Körper (2), der eine von einer Öffnung (3) ausgehende Bohrung (4) aufweist, einem an dem Körper (2) fixierten Kragen (7, 7'), einem Rohr (9), welches Rohr (9) eine Endform (10) mit einem freien Ende (11) und einer radialen Stauchung (12) aufweist, einem in der Bohrung (4) angeordneten Rückhalter (15) und einem Sicherungselement (24, 24'), wobei der Kragen (7, 7') eine Eingangsöffnung (8, 8') aufweist, wobei die Endform (10) des Rohrs (9) durch die Eingangsöffnung (8, 8') und die Öffnung (3) in die Bohrung (4) eingesteckt ist bzw. einsteckbar ist, wobei die Bohrung (4) benachbart zu einem kragenseitigen Ende einen Halteraufnahmeabschnitt (14) aufweist, in welchem Halteraufnahmeabschnitt (14) der Rückhalter (15) angeordnet ist, wobei die radiale Stauchung (12) der vollständig bzw. im Wesentlichen vollständig in die Bohrung (4) eingeführten Endform (10) lösbar mit dem Rückhalter (15) verrastbar ist, wobei das Sicherungselement (24, 24') einen quer bzw. im Wesentlichen quer zu einer Längsachse (6) der Bohrung (4) orientierten Führungsabschnitt (26, 26') und einen parallel bzw. im Wesentlichen parallel zur Längsachse (6) der Bohrung (4) orientierten Anlageabschnitt (25) aufweist, welcher Anlageabschnitt (25) in die Bohrung (4) hineinragt, wobei der Führungsabschnitt (26, 26') auf einer außenseitigen Oberfläche des Kragens (7, 7') in einer quer zur Längsachse (6) der Bohrung (4) orientierten Führung des Kragens eindimensional bzw. im Wesentlichen eindimensional aus einer Freigabeposition in eine Sicherungsposition vorzugsweise reversibel verschiebbar ist, wenn die radiale Stauchung (12) der Endform (10) lösbar mit dem Rückhalter (15) verrastet ist, wobei ein radialer Abstand zwischen der Endform (10) und dem Anlageabschnitt (25) in der Sicherungsposition kleiner ist als der radiale Abstand zwischen der Endform (10) und dem Anlageabschnitt (25) in der Freigabeposition,
wobei die Führung als Führungskanal (35, 35') ausgebildet ist, **dadurch gekennzeichnet, dass** der Führungskanal (35, 35') auf der dem Körper (2) abgewandten Seite offen ausgebildet ist und dass das Sicherungselement (24, 24') als L-Profil ausgebildet ist, wobei ein Schenkel des L-Profils von dem Führungsabschnitt (26, 26') und ein anderer Schenkel von dem Anlageabschnitt (25, 25') gebildet ist und wobei zwischen dem Führungsabschnitt (26, 26') und dem Anlageabschnitt (25, 25') ein rechter Winkel bzw. ein ungefähr rechter Winkel ausgebildet ist.

2. Schnellkupplungssteckverbinderaufbau nach Anspruch 1, wobei eine Länge des Anlageabschnitts (25, 25') in Längsrichtung (6) der Bohrung (4) derart eingestellt ist, dass ein stauchungsseitiges Ende des Anlageabschnitts (25, 25') in der Sicherungsposition beabstandet von der Stauchung (12) der Endform (10) in der Bohrung (4) positioniert ist.

3. Schnellkupplungssteckverbinderaufbau nach einem der Ansprüche 1 oder 2, wobei eine bohrungsseitige Oberfläche des Anlageabschnitts (25, 25') die gleiche bzw. im Wesentlichen die gleiche Krümmung wie die Eingangsöffnung (8, 8') aufweist.

4. Schnellkupplungssteckverbinderaufbau nach einem der Ansprüche 1 bis 3, wobei das Sicherungselement (24, 24') in der Freigabeposition und/oder der Sicherungsposition mit dem Kragen (7, 7') verrastbar ist.

5. Schnellkupplungssteckverbinderaufbau nach einem der Ansprüche 1 bis 4, wobei das Sicherungselement (24, 24') ein Rastelement und der Kragen (7, 7') ein komplementäres Rastelement aufweist.

6. Schnellkupplungssteckverbinderaufbau nach einem der Ansprüche 1 bis 5, wobei der Führungskanal (35, 35') einen trapezförmigen Querschnitt aufweist.

7. Schnellkupplungssteckverbinderaufbau nach einem der Ansprüche 1 bis 6, wobei der Führungskanal (35, 35') eine Kontrollausnehmung (37, 37') aufweist.

8. Schnellkupplungssteckverbinderaufbau nach einem der Ansprüche 1 bis 7, wobei der Führungsabschnitt (26, 26') zumindest ein Führungselement (38, 38') aufweist, das in dem Führungskanal (35, 35') geführt ist.

9. Schnellkupplungssteckverbinderaufbau nach einem der Ansprüche 1 bis 8, wobei das Führungselement (38, 38') zumindest abschnittsweise im Bereich der Kontrollausnehmung (37, 37') angeordnet ist, wenn sich das Sicherungselement (24, 24') in der Sicherungsposition befindet.

10. Schnellkupplungssteckverbinderaufbau nach einem der Ansprüche 1 bis 9, wobei an einem der Bohrung gegenüberliegenden Ende des Führungsabschnitts (26, 26') ein Querbalken (41, 41') vorzugsweise zur Ausbildung eines Griffelements (39, 39') angeordnet ist.

11. Schnellkupplungssteckverbinderaufbau nach Anspruch 10, wobei der Querbalken (41, 41') bzw. das Griffelement (39, 39') zumindest bereichsweise eine reibungserhöhende Profilierung (40a, 40b, 40a', 40b') an einem ergreifbaren Abschnitt des Querbalkens (41, 41') bzw. des Griffelements (39, 39') angeordnet ist.

12. Schnellkupplungssteckverbinderaufbau nach Anspruch 11, wobei an den Querbalken (41, 41') zumindest ein Griffsteg (42, 42') angeschlossen ist, welcher Griffsteg (42, 42') bzw. welche Griffstege (42, 42') sich von dem Querbalken (41, 41') in Richtung des anlageabschnittseitigen Endes des Führungsabschnitts (26, 26') erstreckt bzw. erstrecken.

13. Schnellkupplungssteckverbinderaufbau nach einem der Ansprüche 1 bis 12, wobei der Kragen (7, 7') mit der Maßgabe ausgebildet ist, dass in der Sicherungsposition das Sicherungselement (24, 24') vorzugsweise abgesehen von der Profilierung (40a, 40b) bzw. den Profilierungen (40a, 40b) überstandsfrei auf dem Kragen angeordnet ist.

## Claims

1. A quick coupling plug connection assembly with a body (2) exhibiting a borehole (4) proceeding from an opening (3), a collar (7, 7') fixed to the body (2), a tube (9), said tube (9) exhibiting a final shape (10) with a free end (11) and a radial compression (12), a retainer (15) situated in the borehole (4) and a safety element (24, 24'), wherein the collar (7, 7') exhibits an entry hole (8, 8'), wherein the final shape (10) of the tube (9) is inserted or can be inserted through the entry hole (8, 8') and the opening (3) into the borehole (4), wherein the borehole (4) exhibits a bracket section (14) adjacent to a collar-side end, said bracket section (14) incorporating the retainer (15), wherein the radial compression (12) of the end shape (10) completely or essentially completely introduced into the borehole (4) can be detachably latched with the retainer (15), wherein the safety element (24, 24') exhibits a guide section (26, 26') oriented transverse or essentially transverse to a longitudinal axis (6) of the borehole (4) and a contact section (25) oriented parallel or essentially parallel to the longitudinal axis (6) of the borehole (4), said contact section (25) extending into the borehole (4), wherein the guide section (26, 26') on an outer surface of the collar (7, 7') can be displaced in a guide of the collar oriented transverse to the longitudinal axis (6) of the borehole (4) one dimensionally or essentially one dimensionally from a released position into a secured position, preferably reversibly, when the radial compression (12) of the end shape (10) is detachably latched with the retainer (15), wherein a radial distance between the end shape (10) and contact section (25) is smaller in the secured position than the radial distance between the end shape (10) and contact section (25) in the released position,
wherein the guide is designed as a guide channel (35, 35'), **characterized in that** the guide channel (35, 35') has an open design on the side facing away from the body (2), and that the safety element (24, 24') is designed as an L-profile, wherein a leg of the L-profile is formed by the guide section (26, 26') and another leg by the contact section (25, 25'), and wherein a right angle or roughly a right angle is formed between the guide section (26, 26') and contact section (25, 25').

2. The quick coupling plug connection assembly according to claim 1, wherein a length of the contact section (25, 25') in the longitudinal direction (6) of the borehole (4) is set in such a way that a compression-side end of the contact section (25, 25') is positioned in the borehole (4) spaced apart from the compression (12) of the end shape (10) in the secured position.

3. The quick coupling plug connection assembly according to one of claims 1 or 2, wherein a borehole-side surface of the contact section (25, 25') exhibits the same or essentially the same curvature as the entry hole (8, 8').

4. The quick coupling plug connection assembly according to one of claims 1 to 3, wherein the safety element (24, 24') can be latched with the collar (7, 7') in the released position and/or the secured position.

5. The quick coupling plug connection assembly according to one of claims 1 to 4, wherein the safety element (24, 24') exhibits a latching element, and the collar (7, 7') exhibits a complementary latching element.

6. The quick coupling plug connection assembly according to one of claims 1 to 5, wherein the guide channel (35, 35') exhibits a trapezoidal cross section.

7. The quick coupling plug connection assembly according to one of claims 1 to 6, wherein the guide channel (35, 35') exhibits a control recess (37, 37').

8. The quick coupling plug connection assembly according to one of claims 1 to 7, wherein the guide section (26, 26') exhibits at least one guide element (38, 38') that is guided in the guide channel (35, 35').

9. The quick coupling plug connection assembly according to one of claims 1 to 8, wherein at least sections of the guide element (38, 38') are situated in the area of the control recess (37, 37') when the safety element (24, 24') is in the secured position.

10. The quick coupling plug connection assembly according to one of claims 1 to 9, wherein a crossbeam (41, 41') is arranged at an end of the guide section (26, 26') lying opposite the borehole, preferably for forming a gripping element (39, 39').

11. The quick coupling plug connection assembly according to claim 10, wherein at least areas of the crossbeam (41, 41') or gripping element (39, 39') have a friction-enhancing profiling (40a, 40b, 40a', 40b') on a grippable section of the crossbeam (41, 41') or gripping element (39, 39').

12. The quick coupling plug connection assembly according to claim 11, wherein at least one grip bar (42, 42') is joined to the crossbeam (41, 41'), wherein this grip bar (42, 42') or these grip bars (42, 42') extends or extend from the crossbeam (41, 41') toward the contact section-side end of the guide section (26, 26').

13. The quick coupling plug connection assembly according to one of claims 1 to 12, wherein the collar (7, 7') is designed in such a way that the safety element (24, 24') is preferably arranged on the collar without an overhang apart from the profiling (40a, 40b) or profilings (40a, 40b) in the secured position.

## Revendications

1. Structure de connecteur à raccord rapide avec un corps (2), lequel présente un alésage (4) partant d'une ouverture (3), un col (7, 7') fixé sur le corps (2), un tuyau (9), lequel tuyau (9) présente une forme terminale (10) avec une extrémité libre (11) et une déformation radiale (12), un arrêt (15) disposé dans l'alésage (4) et un élément de sécurité (24, 24'), dans laquelle le col (7, 7') présente une ouverture d'entrée (8, 8'), dans laquelle la forme terminale (10) du tuyau (9) est introduite, ou peut être introduite à travers l'ouverture d'entrée (8, 8') et l'ouverture (3) dans l'alésage (4), dans laquelle l'alésage (4) présente, au voisinage d'une extrémité du côté du col, une partie de logement de butée (14), dans laquelle partie de logement de butée (14) l'arrêt (15) est disposé, dans laquelle la déformation radiale (12) de la forme terminale (10) qui est complètement, ou sensiblement complètement insérée dans l'alésage (4) peut s'encliqueter de manière détachable avec l'arrêt (15), dans laquelle l'élément de sécurité (24, 24') présente une partie de guidage (26, 26') orientée transversalement, ou sensiblement transversalement à un axe longitudinal (6) de l'alésage (4) et une partie de butée (25) orientée parallèlement, ou sensiblement parallèlement à l'axe longitudinal (6) de l'alésage (4), laquelle partie de butée (25) pénètre à l'intérieur de l'alésage (4), dans laquelle la partie de guidage (26, 26') peut être déplacée de préférence de manière réversible sur une surface du côté extérieur du col (7, 7') dans un guide du col orienté transversalement à l'axe longitudinal (6) de l'alésage (4), de manière unidimensionnelle ou sensiblement unidimensionnelle, d'une position de libération dans une position de sécurisation lorsque la déformation radiale (12) de la forme terminale (10) est encliquetée de manière détachable avec l'arrêt (15), dans laquelle, dans la position de sécurisation, une distance radiale entre la forme terminale (10) et la partie de butée (25) est plus petite que la distance radiale entre la forme terminale (10) et la partie de butée (25) dans la position de libération, dans laquelle le guide est réalisé en tant que canal de guidage (35, 35'), **caractérisée en ce que** le canal de guidage (35, 35') est réalisé de manière ouverte sur le côté tournant le dos au corps (2) et **en ce que** l'élément de sécurité (24, 24') est réalisé en tant que profilé en L, dans laquelle une branche du profilé en L est formée par la partie de guidage (26, 26') et une autre branche étant formée par la partie de butée (25, 25'), et dans laquelle, entre la partie de guidage (26, 26') et la partie de butée (25, 25'), un angle droit ou approximativement droit est formé.

2. Structure de connecteur à raccord rapide selon la revendication 1, dans laquelle une longueur de la partie de butée (25, 25') en direction longitudinale (6) de l'alésage (4) est réglée de telle sorte que dans la position de sécurisation, une extrémité du côté de déformation de la partie de butée (25, 25') est positionnée à distance de la déformation (12) de la forme terminale (10) dans l'alésage (4).

3. Structure de connecteur à raccord rapide selon l'une des revendications 1 ou 2, dans laquelle une surface du côté d'alésage de la partie de butée (25, 25') présente la même, ou sensiblement la même courbure que l'ouverture d'entrée (8, 8').

4. Structure de connecteur à raccord rapide selon l'une des revendications 1 à 3, dans laquelle, dans la position de libération et/ou la position de sécurisation, l'élément de sécurité (24, 24') peut s'encliqueter avec le col (7, 7').

5. Structure de connecteur à raccord rapide selon l'une des revendications 1 à 4, dans laquelle l'élément de sécurité (24, 24') présente un élément d'encliquetage, et le col (7, 7') présentant un élément d'encliquetage complémentaire.

6. Structure de connecteur à raccord rapide selon l'une des revendications 1 à 5, dans laquelle le canal de guidage (35, 35') présente une section transversale en forme de trapèze.

7. Structure de connecteur à raccord rapide selon l'une des revendications 1 à 6, dans laquelle le canal de guidage (35, 35') présente un évidement de contrôle (37, 37').

8. Structure de connecteur à raccord rapide selon l'une des revendications 1 à 7, dans laquelle la partie de guidage (26, 26') présente au moins un élément de guidage (38, 38'), lequel est guidé dans le canal de guidage (35, 35').

9. Structure de connecteur à raccord rapide selon l'une des revendications 1 à 8, dans laquelle l'élément de guidage (38, 38') est disposé au moins par tronçons dans la zone de l'évidement de contrôle (37, 37') lorsque l'élément de sécurité (24, 24') se trouve dans la position de sécurisation.

10. Structure de connecteur à raccord rapide selon l'une des revendications 1 à 9, dans laquelle, à une extrémité de la partie de guidage (26, 26') située en vis-à-vis de l'alésage, une barre transversale (41, 41') est disposée de préférence pour la formation d'un élément de saisie (39, 39').

11. Structure de connecteur à raccord rapide selon la revendication 10, dans laquelle la barre transversale (41, 41') ou l'élément de saisie (39, 39') présente, au moins par tronçons, un profilage augmentant la friction (40a, 40b, 40a', 40b') sur une partie de la barre transversale (41, 41') ou de l'élément de saisie (39, 39') pouvant être saisie.

12. Structure de connecteur à raccord rapide selon la revendication 11, au moins une nervure de saisie (42, 42') étant en jonction avec la barre transversale (41, 41'), laquelle nervure de saisie (42, 42') ou lesquelles nervures de saisie (42, 42') s'étend ou s'étendent à partir de la barre transversale (41, 41') en direction de l'extrémité, du côté de la partie de butée, de la partie de guidage (26, 26').

13. Structure de connecteur à raccord rapide selon l'une des revendications 1 à 12, dans laquelle le col (7, 7') est réalisé avec la consigne en ce que, dans la position de sécurisation, l'élément de sécurité (24, 24') soit disposé de préférence sans débordement sur le col mise(s) à part le profilage (40a, 40b) ou les profilages (40a, 40b).
